# EUROPEAN PATENT APPLICATION

(11) **EP 4 483 709 A1**
(43) Date of publication of application: **01.01.2025**
(21) Application number: 23181748.7
(22) Date of filing: 27.06.2023
(51) Int. Cl.: A01G 24/60, B65H 18/22, B65H 19/22, A01G 24/18

(54) **DEVICE FOR ROLLING A SHEET OF MATERIAL INTO A STRAND**

(71) Applicant: Maan Intellectual Properties B.V., 8102 HR Raalte (NL)
(72) Inventor: Slurink, Oscar, 8102 HR Raalte (NL); Maas, Cas Thomas, 8102 HR Raalte (NL)
(74) Representative: 't Jong, Bastiaan Jacob

(57) **Abstract**

The invention relates to a device for rolling a sheet of material, such as a non-woven material, into a strand, which device comprises:
- a first return pulley, a second return pulley and an endless conveyor belt running around the first and second return pulley forming a conveyor belt system with a transport plane extending from the first return pulley towards the second return pulley;
- a support surface arranged between the first and second return pulley, wherein the support surface is arranged parallel to the transport plane and wherein the support surface supports part of the conveyor belt;
- a first guide pulley arranged spaced apart over the support surface, wherein a nip of constant height is formed between the support surface and the surface of the first guide pulley, wherein the width direction of the nip makes an angle of less than 90° and more than 0° with the direction of movement of the conveyor belt over the support surface;
- drive means for driving the conveyor belt, wherein the drive means engage onto the conveyor belt at least just in front of the nip;
wherein the conveyor belt at least runs from the first return pulley along the transport plane, over the support surface into the nip, then forms a loop just after the nip and returns back through the nip along the surface of the first guide pulley and towards the second return pulley.

## Description

The invention relates to a device for rolling a sheet of material, such as a non-woven material, into a strand.

In the field of agriculture it is known to grow plants out of seeds on a substrate, which is typical a mixture of soil and nutrients. It is furthermore known to use a substrate such as rockwool to grow plants on. The advantage is that the plant itself is more clean and free of substrate particles, such as in the case of a soil and nutrient mixture.

Another possible substrate is a non-woven, which is typically formed out of plastic fibers, which are fused together. This allows for a continuous process in which an endless sheet of non-woven material is formed. The plastic fibers could be out of a biodegradable plastic, which is particularly advantageous in the field of growing plants out of seeds.

In order to use such a sheet of non-woven material as a substrate in which seeds can be grown into plants, it is necessary that the non-woven is shaped into small plugs, which can be inserted into the small containers. With a sheet of non-woven material one could cut small strips of material and roll these strips into plugs by hand. However, this is a very costly method and not suitable for production of large quantities of non-woven plugs as substrate for growing plants out of seeds.

It is an object of the invention to reduce or even remove the above mentioned disadvantages.

This object is achieved with a device for rolling a sheet of material, such as a non-woven material, into a strand, which device comprises:
- a first return pulley, a second return pulley and an endless conveyor belt running around the first and second return pulley forming a conveyor belt system with a transport plane extending from the first return pulley towards the second return pulley;
- a support surface arranged between the first and second return pulley, wherein the support surface is arranged parallel to the transport plane and wherein the support surface supports part of the conveyor belt;
- a first guide pulley arranged spaced apart over the support surface, wherein a nip of constant height is formed between the support surface and the surface of the first guide pulley, wherein the width direction of the nip makes an angle of less than 90° and more than 0° with the direction of movement of the conveyor belt over the support surface;
- drive means for driving the conveyor belt, wherein the drive means engage onto the conveyor belt at least just in front of the nip;
wherein the conveyor belt at least runs from the first return pulley along the transport plane, over the support surface into the nip, then forms a loop just after the nip and returns back through the nip along the surface of the first guide pulley and towards the second return pulley.

When a sheet of material, in particular non-woven, is fed to the device at the first return pulley, the material will be transported by the conveyor belt to the nip at the first guide pulley. The sheet of material will enter the nip and due to the loop in the conveyor belt start to roll up.

Because the width direction of the nip makes an angle of less than 90° and more than 0° with the direction of movement of the conveyor belt over the support surface, the sheet material will be rolled up askew and leave the loop sideways in a rolled up strand. This strand can then subsequently be cut into smaller plugs, which can be used as a substrate for growing plants out of seed.

The drive means ensure that the loop is maintained in the conveyor belt by engaging just in front of the nip, such that a pressure force is obtained in the part of the conveyor belt just after the nip, i.e. in the the loop of the conveyor belt.

In a preferred embodiment of the device according to the invention the loop in the conveyor belt formed just after the nip encloses a space, which increases in cross-section in the width direction of the nip and towards the side of the conveyor belt where the first guide pulley is most distant from the first return pulley.

Having the cross-section increase ensures that when forming the strand by rolling up the sheet of material, the pressure of the loop on the formed strand is more equal along the width of the nip and therefore along the width of the loop. This results in a strand of material with a more equal density in radial direction of the strand.

In a further preferred embodiment of the device according to the invention the first guide pulley is truncated cone shaped. Using a truncated cone shape for the first guide pulley allows for a loop in the conveyor belt with increasing cross-section, while the section of the conveyor belt after the first guide pulley will run parallel to the section in front of the loop. This allows for an easier handling of the conveyor belt along the second return pulley and back to the first return pulley.

A further embodiment of the device according to the invention further comprises a second guide pulley, preferably truncated cone shaped, arranged along the conveyor belt between the first guide pulley and the second return pulley, and a third guide pulley arranged adjacent to the second guide pulley and between said second guide pulley and the second return pulley.

The second and third return pulley allow for correction of the deviation of alignment of the conveyor belt between the first and second return pulley. Having for example the second guide pulley equally shaped as the first guide pulley and under an angle inverted from the angle of the first guide pulley, as well as having the third guide pulley shaped to urge the conveyor belt along a path identical to the loop in the conveyor belt, then the deviation of alignment is easily compensated by the second and third guide pulley. However different setups and sizes of guide pulleys could also achieve the correction in the alignment of the conveyor belt.

The driving of the conveyor belt could be achieved by two driven wheels, which engage on both sides of the conveyor belt and just before the nip, such that the conveyor belt is pushed into the nip and the loop can be obtained behind the nip.

However, in another preferred embodiment of the device according to the invention the drive means for driving the conveyor belt comprise:
- a secondary conveyor belt system with a secondary transport plane, which forms the support surface, which secondary conveyor belt system has an air permeable conveyor belt; and
- a low pressure chamber of which one wall is formed by part of the secondary conveyor belt, such that the endless conveyor belt running around the first and second return pulley is pulled against the secondary conveyor belt due to the pressure difference between the ambient pressure and the pressure in the low pressure chamber.

With the secondary conveyor belt system in combination with the low pressure chamber it is possible to drive the conveyor belt of the device by engaging on the conveyor belt from just in front of the nip up to the loop, such that no tension is present in the loop itself and the shape of the loop is maintained, while the conveyor belt is driven.

Preferably, the projection of the low pressure chamber, viewed in a direction perpendicular to the support surface, extends from at least just in front of the nip towards behind the nip but not fully overlapping with the projection of the loop formed by the conveyor belt.

The shape of the projection of the low pressure chamber allows for the driving force to be applied on an exact section of the conveyor belt.

In a further preferred embodiment of the device according to the invention the projection of the low pressure chamber extends up to the centerline of the projection of the loop formed by the conveyor belt.

Having the driving force engaging up to the centerline of the projection of the loop ensures optimally that the shape of the loop is maintained while the conveyor belt is driven.

In yet another embodiment of the device according to the invention the first return pulley and the second return pulley are each provided with at least a toothed section extending in circumferential direction and wherein the endless conveyor belt is provided in longitudinal direction with a path of equally spaced openings, which engage with the toothed section of the first and second return pulley, such that the return path of the conveyor belt is tensionless.

The toothed sections ensure that the path of the conveyor belt is controlled along the transport plane and the loop, while the conveyor belt can move freely, without tension from the second return roller back to the first return roller. This facilitates easier control of the formed loop in which strand is rolled up.

Preferably, in the device according to the invention the conveyor belt system further comprises a first and second counter roller positioned parallel to respectively the first and second return roller with the conveyor belt locked between the respective return roller and counter roller.

The counter rollers ensure that the conveyor belt cannot get out of engagement with the toothed sections of the return rollers.

These and other features of the invention will be elucidated in conjunction with the accompanying drawings.
Figure 1 shows a schematic perspective view of an embodiment of a device according to the invention.
Figure 2 shows a top view of the device according to figure 1.
Figure 3 shows a detailed side view of the device according to figure 2 along the lines III-III.
Figure 4 shows a cross sectional view of the device according to figure 3 along the lines IV-IV.

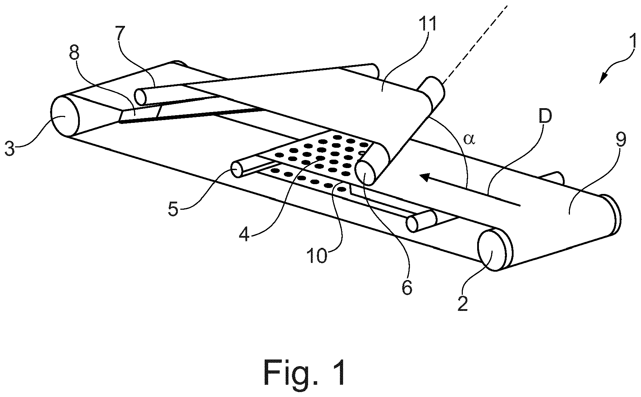

Figure 1 shows in perspective view an embodiment of a device 1 according to the invention. The device 1 has a first return pulley 2 and a second return pulley 3. A support surface 4 is provided by the air permeable conveyor belt of the secondary conveyor belt system 5. A first guide pulley 6 is arranged spaced apart over the support surface 4 and forms a nip therewith. The first guide pulley 6 and the corresponding formed nip makes an angle α with the transport direction D. A second guide pulley 7 and a third guide pulley 8 are also provided.

The device 1 is furthermore provided with a conveyor belt 9, which runs from the first return pulley 2 over the support surface 4 through the nip formed by the support surface and the first guide pulley 6. Just behind the nip, the conveyor belt 9 makes a loop 10 and goes back through the nip and over the first guide pulley 6. Because the first guide pulley 6 has a truncated cone shape, the section 11 of the conveyor belt 9 is parallel but offset from the main direction of the conveyor belt 9. This offset is corrected by the second truncated cone shaped guide pulley 7 and the third truncated cone shaped guide pulley 8. The conveyor belt 9 then continues over the second return pulley 3 and goes back to the first return pulley 2.

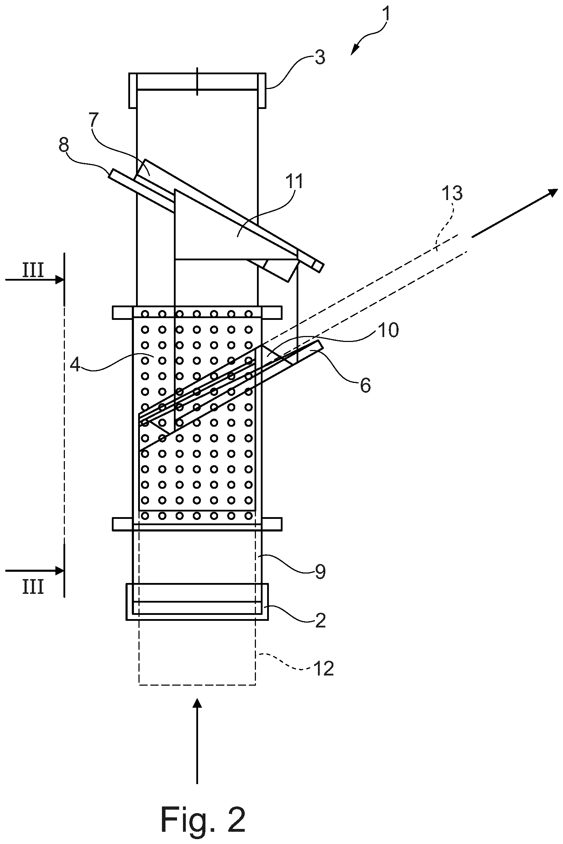

Figure 2 shows a top view of the device 1 according to figure 1. A sheet of material 12 is fed from the first return pulley 2 onto the conveyor belt 9 and is transported to the nip with the first guide pulley 6 and enters the loop 10 in the conveyor belt 9. As a result the sheet of material 12 is rolled up into a strand 13 which exits the loop 10 due to the angle α as illustrated in figure 1.

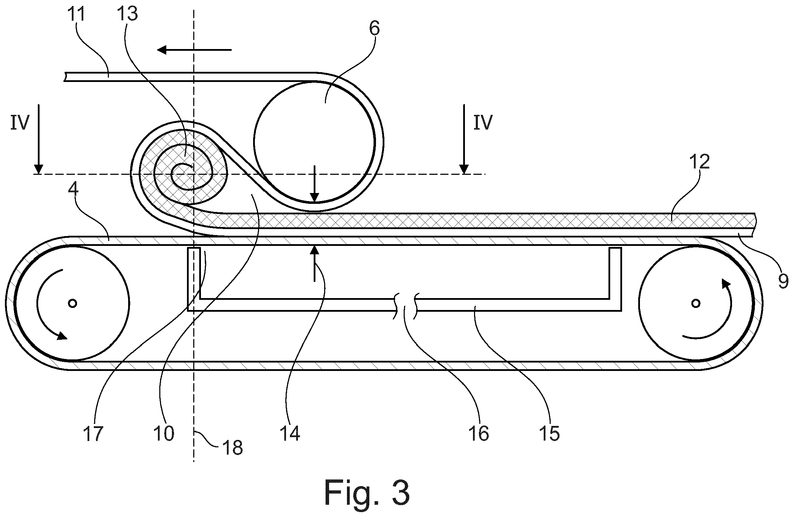

Figure 3 shows a detailed side view of the device 1. From this figure the nip 14 is clearly shown between the first guide pulley 6 and the support surface 4. The conveyor belt 9 moves together with the sheet of material 12 through the nip 14 and as the conveyor belt 9 forms a loop 10 after the nip 14, the sheet of material 12 is rolled up into a strand 13.

Below the support surface 4 formed by a air permeable conveyor belt a low pressure chamber 15 is provided. This low pressure chamber 15 is connected via an outlet 16 to an air pump to extract air from the low pressure chamber 15 and cause a lower pressure in the chamber 15 than the ambient pressure.

The low pressure in the chamber 15 allows for the conveyor belt 9 to be pulled against the support surface 4, i.e. the air permeable conveyor belt and by driving this belt, the conveyor belt 9 is driven. The edge 17 of the low pressure chamber 15 extends up to the centerline 18 of the projection of the loop 10, such that it is ensured that by the pulling force of the low pressure, the loop 10 is kept in shape.

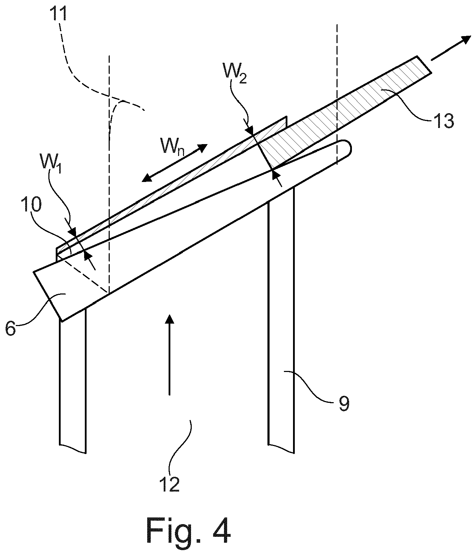

Figure 4 shows a cross sectional view of the device 1 according to figure 3 along the lines IV-IV. In this view, the loop 10 is shown in cross-section. The width of the loop 10 increases from w₁ to w₂ along the width direction wₙ of the nip 14. This accommodates for the increase in diameter of the strand 13 when it progresses out of the loop 10.

By having the first guide pulley 6 having a truncated cone shape, the pressure in the loop 10 on the rolled up material of the strand 13 is kept generally constant, while additional layers of material 12 are rolled up.

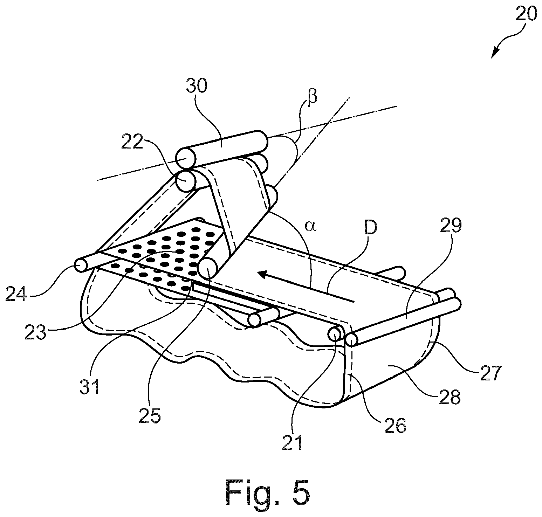

Figure 5 shows in perspective view a second embodiment of a device 20 according to the invention. The device 20 has a first return pulley 21 and a second return pulley 22. A support surface 23 is provided by the air permeable conveyor belt of the secondary conveyor belt system 24. A first guide pulley 25 is arranged spaced apart over the support surface 23 and forms a nip therewith. The first guide pulley 25 and the corresponding formed nip makes an angle α with the transport direction D. This corresponds in general with the device 1 according to the figures 1 - 4.

In addition to the device 1, the first return pulley 21 and the second return pulley 22 are provided on either end with a toothed section, which engage with the two paths 26, 27 of equally spaced openings arranged in the conveyor belt 28. (This is similar to fanfold paper used for continuous feed printers) Two counter rollers 29, 30 ensure that the openings 26, 27 do not get out of engagement with the toothed sections.

The second return pulley 22 and counter roller 30 are positioned over the first guide pulley 25 and under an angle β therewith to compensate for the loop 31 present beyond the first guide pulley 25.

The return path of the conveyor belt 28 between the second return pulley 22 and the first return pulley 21 can move more or less freely and without any tension in the belt 28 other than the driving forces.

## Claims

1. Device for rolling a sheet of material, such as a non-woven material, into a strand, which device comprises:
- a first return pulley, a second return pulley and an endless conveyor belt running around the first and second return pulley forming a conveyor belt system with a transport plane extending from the first return pulley towards the second return pulley;
- a support surface arranged between the first and second return pulley, wherein the support surface is arranged parallel to the transport plane and wherein the support surface supports part of the conveyor belt;
- a first guide pulley arranged spaced apart over the support surface, wherein a nip of constant height is formed between the support surface and the surface of the first guide pulley, wherein the width direction of the nip makes an angle of less than 90° and more than 0° with the direction of movement of the conveyor belt over the support surface;
- drive means for driving the conveyor belt, wherein the drive means engage onto the conveyor belt at least just in front of the nip;
wherein the conveyor belt at least runs from the first return pulley along the transport plane, over the support surface into the nip, then forms a loop just after the nip and returns back through the nip along the surface of the first guide pulley and towards the second return pulley.

2. Device according to claim 1, wherein the loop in the conveyor belt formed just after the nip encloses a space, which increases in cross-section in the width direction of the nip and towards the side of the conveyor belt where the first guide pulley is most distant from the first return pulley.

3. Device according to claim 2, wherein the first guide pulley is truncated cone shaped.

4. Device according to any of the preceding claims, further comprising a second guide pulley, preferably truncated cone shaped, arranged along the conveyor belt between the first guide pulley and the second return pulley, and a third guide pulley arranged adjacent to the second guide pulley and between said second guide pulley and the second return pulley.

5. Device according to any of the preceding claims, wherein the drive means for driving the conveyor belt comprise:
- a secondary conveyor belt system with a secondary transport plane, which forms the support surface, which secondary conveyor belt system has an air permeable conveyor belt; and
- a low pressure chamber of which one wall is formed by part of the secondary conveyor belt, such that the endless conveyor belt running around the first and second return pulley is pulled against the secondary conveyor belt due to the pressure difference between the ambient pressure and the pressure in the low pressure chamber.

6. Device according to claim 5, wherein the projection of the low pressure chamber, viewed in a direction perpendicular to the support surface, extends from at least just in front of the nip towards behind the nip but not fully overlapping with the projection of the loop formed by the conveyor belt.

7. Device according to claim 6, wherein the projection of the low pressure chamber extends up to the centerline of the projection of the loop formed by the conveyor belt.

8. Device according to any of the preceding claims, wherein the first return pulley and the second return pulley are each provided with at least a toothed section extending in circumferential direction and wherein the endless conveyor belt is provided in longitudinal direction with a path of equally spaced openings, which engage with the toothed section of the first and second return pulley, such that the return path of the conveyor belt is tensionless.

9. Device according to claim 8, wherein the conveyor belt system further comprises a first and second counter roller positioned parallel to respectively the first and second return roller with the conveyor belt locked between the respective return roller and counter roller.
